Europäisches Patentamt

European Patent Office

Office européen des brevets

(19)

(11) Veröffentlichungsnummer : **0 188 172**
**B1**

(12) # EUROPÄISCHE PATENTSCHRIFT

(45) Veröffentlichungstag der Patentschrift :
17.08.88

(21) Anmeldenummer : 85810526.5

(22) Anmeldetag : 11.11.85

(51) Int. Cl.⁴ : **F 16 B 13/06**

(54) **Spreizanker.**

(30) Priorität : **14.12.84 DE 3445713**

(43) Veröffentlichungstag der Anmeldung :
**23.07.86 Patentblatt 86/30**

(45) Bekanntmachung des Hinweises auf die Patenterteilung : **17.08.88 Patentblatt 88/33**

(84) Benannte Vertragsstaaten :
**AT CH DE FR GB LI NL SE**

(56) Entgegenhaltungen :
**EP-A- 0 092 661**
**AT-B-   328 158**
**DE-U- 7 800 232**
**FR-A- 2 176 390**
**US-A- 2 842 999**

(73) Patentinhaber : **HILTI Aktiengesellschaft**

**FL-9494 Schaan (LI)**

(72) Erfinder : **Leibhard, Erich**
**Bauweberstrasse 2**
**D-8000 München 71 (DE)**
Erfinder : **Herb, Armin**
**Lärchenstrasse 9**
**D-8123 Peissenberg (DE)**

(74) Vertreter : **Wildi, Roland**
**Hilti Aktiengesellschaft Patentabteilung**
**FL-9490 Schaan (LI)**

## Beschreibung

Die Erfindung betrifft einen Spreizanker zum Setzen in Aufnahmebohrungen, mit einer Spreizhülse, einer in diese einziehbaren Kegelhülse und einem auf einer Zugstange sitzenden, entgegen der Setzrichtung in die Kegelhülse einziehbaren Spreizkegel, wobei die äusserenkegeligen Konturen von Kegelhülse und Spreizkegel unterschiedlich grosse Kegelwinkel aufweisen (EP-A-0 092 661).

Für Anwendungen in der Zugzone werden von Spreizankern hohe Aufspreizmasse gefordert. Der Versuch, diese Forderung mit bekannten Ankern, die über eine Spreizhülse, eine Kegelhülse und einen Spreizkegel verfügen, zu erfüllen, hat bis anhin fehlgeschlagen. So erfolgt bei einem solchen bekannten Spreizanker der Spreizvorgang in der Weise, dass über eine Zugstange der Spreizkegel entgegen der Setzrichtung gezogen wird. Der Spreizkegel wirkt seinerseits auf die Kegelhülse ein, die in die Spreizhülse einläuft. Nach dem Einlaufen der Kegelhülse und einem ersten Spreizen der Spreizhülse läuft der Spreizkegel in die Kegelhülse ein und bewirkt unter Weitung der Kegelhülse ein weiteres Spreizen der Spreizhülse. Diese Abfolge des Spreizvorganges wird erreicht, indem die Kegelhülse einen kleineren Kegelwinkel als der Spreizkegel aufweist.

Nachteilig ist bei diesem bekannten Spreizanker, dass je nach Festigkeit des Aufnahmematerials die Kegelhülse unterschiedlich tief in die Spreizhülse einläuft, bevor der Spreizkegel zur Wirkung kommt. Insbesondere bei Aufnahmematerial mit hoher Festigkeit und bei engen Aufnahmebohrungen kommt es vor, dass die Kegelhülse nur geringfügig in die Spreizhülse einläuft und diese nur geringfügig spreizt. Das darauffolgende Einlaufen des Spreizkegels in die Kegelhülse bewirkt ein Weiten der Kegelhülse nur in dem noch aus der Spreizhülse ragenden Abschnitt, so dass es zu keiner nennenswerten weiteren Spreizung der Spreizhülse kommt. Beim Einsatz in Aufnahmematerial mit geringer Festigkeit und bei weiten Aufnahmebohrungen wird dem Einlaufen der Kegelhülse wenig Widerstand entgegengesetzt, so dass diese völlig in die Spreizhülse eingezogen wird, ohne dass ein Weiten der Kegelhülse durch Einlaufen des Spreizkegels erfolgt. Damit verfügt dieser bekannte Spreizanker in beiden der geschilderten Anwendungsfälle und vor allem auch bei einem Einsatz in rissgefährdeten Zugzonen über ein zu geringes Aufspreizmass.

Der Erfindung liegt die Aufgabe zugrunde, einen Spreizdübel zu schaffen, der sich in allen Anwendungsfällen durch ein hohes Aufspreizmass auszeichnet.

Erfindungsgemäss wird die Aufgabe dadurch gelöst, dass ein den Einziehweg des Teils mit dem kleineren Kegelwinkel begrenzender, als Radialvorsprung ausgebildeter Anschlag vorgesehen ist.

Bei dem Teil mit kleinerem Kegelwinkel kann es sich entweder um die Kegelhülse oder um den Spreizkegel handeln. Die unterschiedlichen Kegelwinkel zwischen Kegelhülse und Spreizkegel bewirken, dass beim Verschieben des Spreizkegels durch die Zugstange entgegen der Setzrichtung zuerst der Teil mit kleinerem Kegelwinkel durch Einlaufen bis zum Anschlag eine erste Spreizung des Ankers hervorruft. In der Folge verschiebt sich auch der Teil mit grösserem Kegelwinkel entgegen der Setzrichtung und schafft eine weitere Spreizung. Der Verschiebeweg des Teils mit kleinerem Kegelwinkel ist durch den Anschlag unabhängig von äusseren Bedingungen und deshalb immer gleich gross.

Grundsätzlich ist es möglich, die Zugstange als Ganzes über eine Mutter, unter Abstützung am Aufnahmematerial, mit dem Spreizkegel entgegen der Setzrichtung zu ziehen oder die Zugstange als Kopfschraube auszubilden, bei deren Drehen über das Gewinde der Spreizkegel entgegen der Setzrichtung gezogen wird.

Vorzugsweise ist der Anschlag im setzrichtungsseitigen Endbereich des Spreizkegels angeordnet. Der diesfalls den kleineren Kegelwinkel aufweisende Spreizkegel kann den Anschlag direkt anschliessend an den erweiterten Auslauf der Kegelzone tragen. Ebenso ist es möglich, an den erweiterten Auslauf der Kegelzone einen dem erweiterten Durchmesser der Kegelzone entsprechenden zylindrischen Fortsatz anzuschliessen, der in axialem Abstand zum Auslauf der Kegelzone den Anschlag trägt.

Zweckmässig beträgt der Kegelwinkel des Spreizkegels 12 bis 14°, der Kegelwinkel der Kegelhülse 15 bis 17°. Um das Einlaufen des Spreizkegels in die Kegelhülse zu begünstigen, ist die Bohrung der Kegelhülse in Setzrichtung mit einem dem Kegelwinkel des Spreizkegels entsprechenden Winkel kegelig erweitert. Ebenso ist die Zentralbohrung der Spreizhülse in Setzrichtung entsprechend dem Kegelwinkel der Kegelhülse kegelig erweitert.

Nach einem weiteren Vorschlag der Erfindung ist der Anschlag im setzrichtungsseitigen Endbereich der Kegelkontur der Kegelhülse angeordnet. Bei dieser Ausführungsform weist die Kegelhülse den kleineren Kegelwinkel auf. Demnach läuft beim Setzvorgang zuerst die Kegelhülse bis zum Anschlag in die Spreizhülse ein. In der Folge verschiebt sich der Spreizkegel in die Kegelhülse und bewirkt deren Weitung als auch ein weiteres Spreizen der Spreizhülse. Zweckmässig beträgt der Kegelwinkel der Kegelhülse 12 bis 14°, der Kegelwinkel des Spreizkegels 15 bis 17°.

Mit Vorteil ragt der Anschlag in die lichte Weite der Spreizhülse. Diese Ausbildung ist zweckmässig, wenn die Kegelhülse den kleineren Kegelwinkel aufweist. Die Kegelhülse kann konstruktiv sehr einfach ausgebildet sein, indem diese keiner besonderen Mittel zum Zusammenwirken mit dem Anschlag bedarf. Zur Begrenzung des Einlaufweges der Kegelhülse legt sich die entgegen der Setzrichtung weisende Stirnseite der Kegelhülse gegen den Anschlag, worauf der Spreizkegel zur weiteren Spreizung eingezogen wird.

Der Anschlag ist als Radialvorsprung ausgebildet. Der Radialvorsprung kann beispielsweise durch eine einstückig angeformte umlaufende Ringschulter gebildet sein. Ebenso ist es möglich, einen in eine Nut eingelassenen radial überstehenden Sicherungsring zur Bildung eines Radialvorsprunges einzusetzen.

Um einen zuverlässigen Angriff des Radialvorsprunges nach dem Einlaufen des Teils mit kleinerem Kegelwinkel auch beim Auftreten sehr hoher Zugkräfte an der Zugstange zu gewährleisten, entspricht das Radialmass des Radialvorsprunges vorzugsweise im wesentlichen dem Durchmesser der Spreizhülse. So ist es nicht möglich, dass der zum Auflaufen des Radialvorsprungs vorgesehene hülsenförmige Teil des Ankers unter Zugbedingungen vom Radialvorsprung abgeleitet und zwischen diesen und die Wandung der Aufnahmebohrung im Aufnahmematerial ausweicht.

Die Erfindung wird nachstehend anhand von Zeichnungen, die Ausführungsbeispiele eines Spreizankers wiedergeben, näher erläutert. Es zeigen :

Fig. 1 einen ungespreizten Spreizanker im Längsschnitt ;

Fig. 1a, b, c die Verankerungsschritte des Spreizankers nach Fig. 1 ;

Fig. 2a, b, c eine weitere Ausführungsform eines Spreizankers in dessen Verankerungsschritten ;

Fig. 3 eine weitere Ausführungsform eines ungespreizten Spreizankers im Längsschnitt.

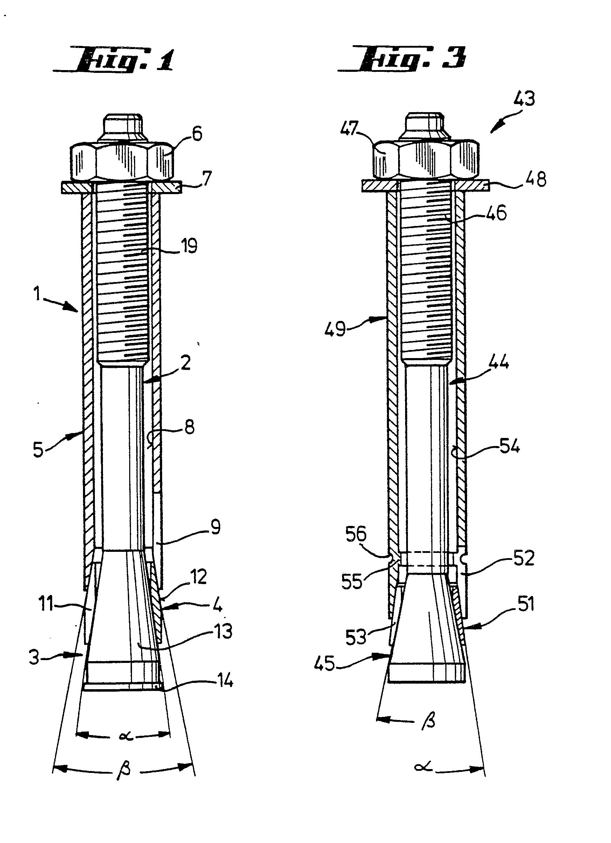

Der in Fig. 1 insgesamt mit 1 dargestellte Spreizanker verfügt über eine insgesamt mit 2 bezeichnete Zugstange mit einem an diese angeformten, insgesamt mit 3 bezeichneten Spreizkegel. Eine insgesamt mit 4 bezeichnete Kegelhülse umgibt den Spreizkegel 3 und ragt in eine im wesentlichen die Zugstange 2 umgebende, insgesamt mit 5 bezeichnete Spreizhülse ein. Dem Einziehen des Spreizkegels 3 bzw der Zugstange 2 dient eine Mutter 6, die sich an einer Unterlagscheibe 7, deren Durchmesser jenen der Spreizhülse 5 überragt, abstützt.

Die Spreizhülse 5 weist eine sich im setzrichtungsseitigen Endabschnitt kegelig erweiternde Zentralbohrung 8 auf. Um das Spreizen zu erleichtern, ist die Spreizhülse 5 mit zumindest einem zum setzrichtungsseitigen Ende hin offenen Längsschlitz 9 versehen.

Die Kegelhülse 4 weist einen durchgehenden Längsschlitz 11 auf und verfügt über eine teilweise in die Spreizhülse 5 einragende Kegelkontur 12.

Der Spreizkegel 3 durchsetzt mit seiner Kegelkontur 13 die Kegelhülse 4. Der Kegelwinkel $\alpha$ des Spreizkegels 3 ist dabei kleiner als der Kegelwinkel $\beta$ der Kegelhülse 4. An die Kegelkontur 13 des Spreizkegels 3 schliesst sich ein zylindrischer Abschnitt an, dessen freies Ende von einem Anschlag 14 in Form eines umlaufenden Radialvorsprunges überragt ist.

Wie den Fig. 1a, b, c zu entnehmen ist, dient der Spreizanker 1 dem Festlegen eines Gegenstandes 15 an einem Aufnahmematerial 16, wie beispielsweise Beton. Hierzu wird der Spreizanker 1 durch eine Durchgangsbohrung 17 des Gegenstandes 15 hindurch in eine Aufnahmebohrung 18 eingeführt, wie dies in Fig. 1a durch einen Pfeil angedeutet ist. Die Unterlagscheibe 7 legt sich dabei am Gegenstand 15 an.

Durch darauffolgendes Aufschrauben der Mutter 6 auf ein Gewinde 19 der Zugstange 2 wird die Zugstange in der Spreizhülse 5 entgegen der Setzrichtung gezogen. Dabei läuft die Kegelkontur 13 des Spreizkegels 3, da deren Kegelwinkel $\alpha$ kleiner als der Kegelwinkel $\beta$ der Kegelhülse 4 ist, in die Kegelhülse 4 ein, während die Kegelhülse 4 gegenüber der Spreizhülse 5 nicht verschoben wird. Dies führt zu einem Weiten der Kegelhülse 4, die ihrerseits im Ueberlappungsbereich mit der Spreizhülse 5 diese spreizt. Am Ende dieses Verankerungsvorganges läuft der Anschlag 14 an der setzrichtungsseitigen Stirnseite der Kegelhülse 4 auf.

Durch weiteres Aufschrauben der Mutter 6 wird über den Anschlag 14 alsdann die Kegelhülse 4 tiefer in die Spreizhülse 5 eingezogen, wodurch diese über einen längeren Abschnitt weiter gespreizt wird, so dass ein hohe Verankerungswerte gewährleistender Eingriff der Spreizhülse 5 in das Aufnahmematerial 16 zustande kommt, wie dies der Fig. 1c zu entnehmen ist.

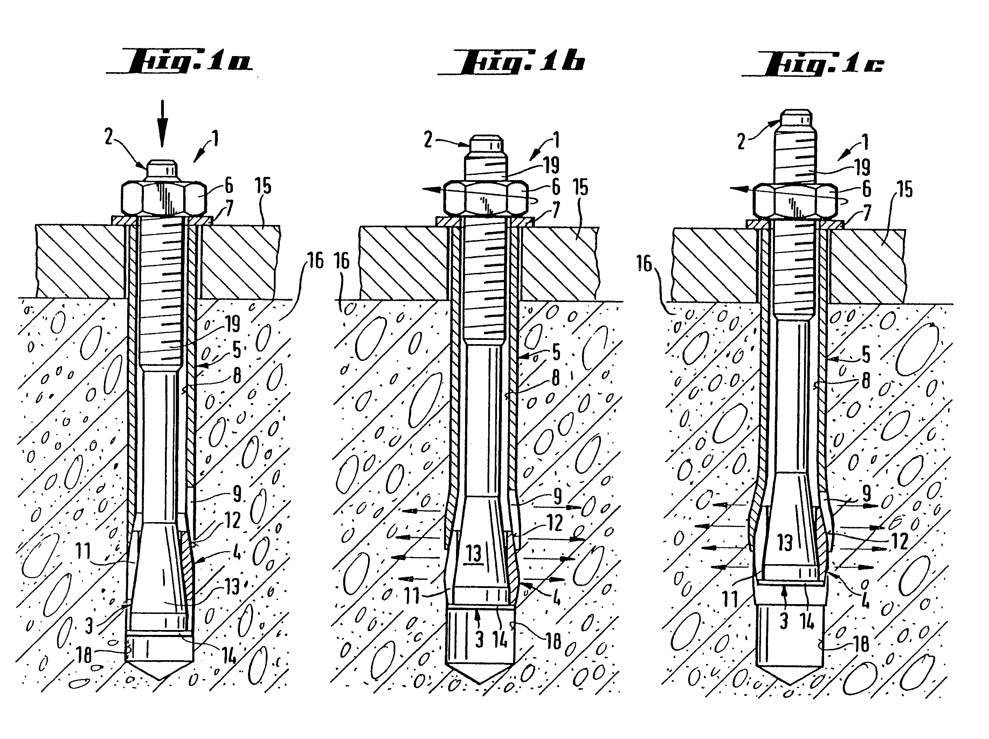

Auch der insgesamt mit 21 bezeichnete Spreizanker nach den Fig. 2a, b, c dient dem Festlegen eines Gegenstandes 22 an einem Aufnahmematerial 23. Hierzu wird der Spreizanker 21 wiederum durch eine Durchgangsbohrung 24 im Gegenstand 22 hindurch in eine Aufnahmebohrung 25 im Aufnahmematerial 23 eingeführt.

Der Spreizanker 21 besteht aus einer insgesamt mit 26 bezeichneten Zugstange mit einem angeformten, insgesamt mit 27 bezeichneten Spreizkegel. Dieser wird zum Verankerungszwecke in eine insgesamt mit 28 bezeichnete Kegelhülse eingezogen, die ihrerseits in eine insgesamt mit 29 bezeichnete Spreizhülse teilweise einragt. Dem Verschieben der Zugstange 26 dient eine Mutter 31, die sich an einer Unterlagscheibe 32 abstützt.

Die Zugstange 26 verfügt über ein Gewinde 33 für die Mutter 31. Ferner ist ein kegeliger Abschnitt 34 vorgesehen, der mit der kegeligen Kontur der Zentralbohrung 35 der Spreizhülse 29 korrespondiert. Sowohl die Spreizhülse 29 als auch die Kegelhülse 28 verfügen zumindest über einen Längsschlitz 36 bzw 37, um das Spreizen dieser Hülsen zu erleichtern. Die Kegelhülse 28 verfügt ferner über eine Kegelkontur 38, die in Setzrichtung an einem Anschlag 39 in Form eines Radialvorsprunges endet. Der Durchmesser des letzteren entspricht dem Durchmesser der Spreizhülse 29. In die Kegelhülse 28 ist der Spreizkegel 27 mit einer Kegelkontur 41 einziehbar. Der Kegelwinkel $\alpha$ der Kegelhülse 28 ist kleiner als der Kegelwinkel $\beta$ des Spreizkegels 27.

Nach dem Einführen des Spreizankers 21 gemäss Fig. 2a wird durch Aufschrauben der Mutter 31 die Zugstange 26 und damit der Spreizkegel 27 entgegen der Setzrichtung gezogen. Die den kleineren Kegelwinkel $\alpha$ aufweisende Kegelhülse 28 wird dabei vom Spreizkegel 27 tiefer in die Spreizhülse 29 eingezogen, bis der Anschlag 39 an der setzrichtungsseitigen Stirnfläche der Spreizhülse 29 aufläuft. Die Spreizhülse 29 wird dadurch gegen die Wandung der Aufnahmebohrung 25 verspreizt.

Durch weiteres Aufschrauben der Mutter 31 läuft alsdann der Spreizkegel 27 in die sich an der Spreizhülse 29 abstützende Kegelhülse 28 tiefer ein, wodurch die Kegelhülse 28 geweitet und als Folge die Spreizhülse 29 weiter gespreizt wird, wie dies der Fig: 2c zu entnehmen ist.

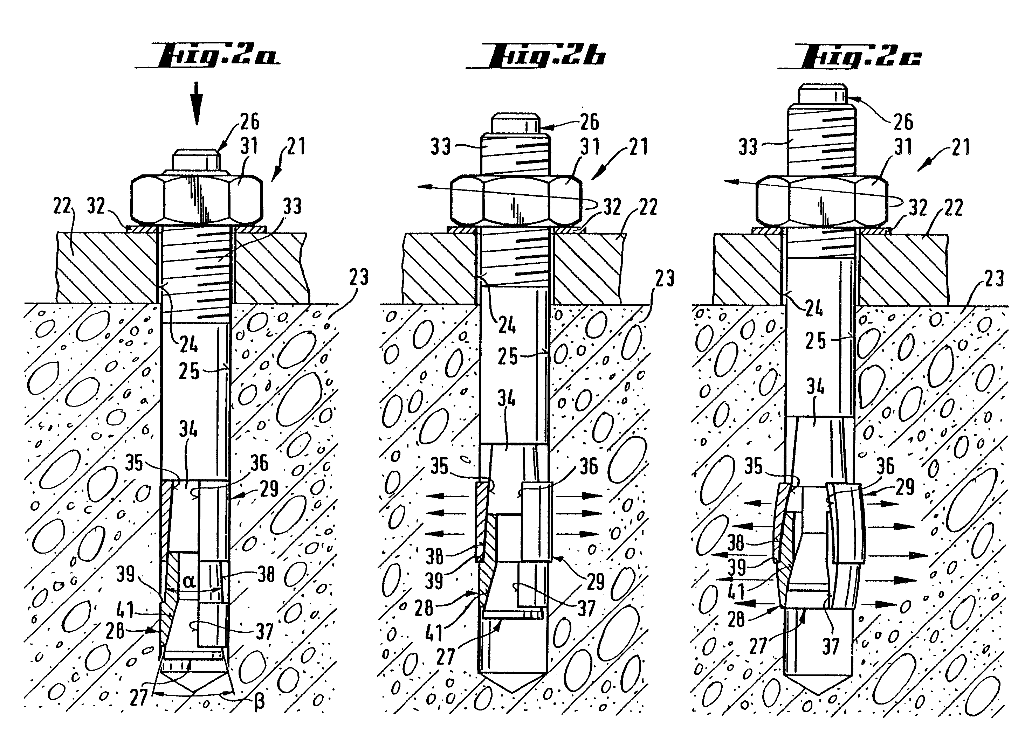

Der in Fig. 3 gezeigte, insgesamt mit 43 bezeichnete Spreizanker besteht wiederum aus einer insgesamt mit 44 bezeichneten Zugstange, an die ein insgesamt mit 45 bezeichneter Spreizkegel angeformt ist. Auf einem Gewinde 46 der Zugstange 44 sitzt eine Mutter 47. Deren Abstützung dient eine Unterlagscheibe 48. Die Zugstange 44 durchsetzt eine insgesamt mit 49 bezeichnete Spreizhülse, an die in Setzrichtung eine insgesamt mit 51 bezeichnete Kegelhülse anschliesst. Spreizhülze 49 und Kegelhülse 51 weisen je einen Längsschlitz 52 bzw 53 zum Begünstigen der Spreizung auf. In die Zentralbohrung 54 der Spreizhülse 49 ragt im längsgeschlitzten Abschnitt ein Anschlag 55 in Form eines umlaufenden Radialvorsprunges. Auf Höhe des Anschlages 55 weist die Spreizhülse 49 eine Ringnut 56 auf, die ein Ausschwenken des längsgeschlitzten Abschnittes zur Erzielung einer Verankerung begünstigt. Die Zentralbohrung 54 ist im setzrichtungsseitigen Endbereich kegelig erweitert, um das Einlaufen der Kegelhülse 51 zu erleichtern.

Der Kegelwinkel $\alpha$ der Kegelhülse 51 ist kleiner als der Kegelwinkel $\beta$ des Spreizkegels 45. Dadurch wird erreicht, dass beim Einziehen der Zugstange 44 zuerst die Kegelhülse 51 bis zum Auftreffen am Anschlag 55 in die Spreizhülse 49 einläuft, was zu einer ersten Spreizung des längsgeschlitzten Abschnittes der Spreizhülse 49 führt. Erst in der Folge läuft der Spreizkegel 45 in die axial festgelegte Kegelhülse 51 tiefer ein und weitet diese radial, was zu einem weiteren Spreizen der Spreizhülse 49 führt.

### Patentansprüche

1. Spreizanker zum Setzen in Aufnahmebohrungen, mit einer Spreizhülse, einer in diese einziehbaren Kegelhülse und einem auf einer Zugstange sitzenden, entgegen der Setzrichtung in die Kegelhülse einziehbaren Spreizkegel, wobei die äusseren keseligen Konturen von Kegelhülse und Spreizkegel unterschiedlich grosse Kegelwinkel aufweisen, dadurch gekennzeichnet, dass ein den Einziehweg des Teils mit dem kleineren Kegelwinkel ($\alpha$) begrenzender, als Radialvorsprung ausgebildeter Anschlag (14, 39, 55) vorgesehen ist.

2. Spreizanker nach Anspruch 1, dadurch gekennzeichnet, dass der Anschlag (14) im setzrichtungsseitigen Endbereich des Spreizkegels (3) angeordnet ist.

3. Spreizanker nach Anspruch 1, dadurch gekennzeichnet, dass der Anschlag (39) im setzrichtungsseitigen Endbereich der Kegelkontur (38) der Kegelhülse (28) angeordnet ist.

4. Spreizanker nach Anspruch 1, dadurch gekennzeichnet, dass der Anschlag in die lichte Weite der Spreizhülse (49) ragt.

5. Spreizanker nach Anspruch 4, dadurch gekennzeichnet, dass das Radialmass des Radialvorsprunges im wesentlichen dem Durchmesser der Spreizhülse (5, 29) entspricht.

### Claims

1. An expansible anchor for setting in reception bores, comprising an expansible sleeve, a conical sleeve which can be drawn into this and an expansion cone which is seated on a tension rod and which can be drawn into the conical sleeve contrary to the setting direction, in which respect the outer conical contours of the conical sleeve and of the expansion cone have taper angles of different sizes, characterised in that there is provided a stop (14, 39, 55) which is designed as a radial projection and which limits the draw-in path of the part having the small taper angle ($\alpha$).

2. An expansible anchor according to claim 1, characterised in that the stop (14) is arranged in the setting-direction-sided end region of the expansion cone (3).

3. An expansible anchor according to claim 1, characterised in that the stop (39) is arranged in the setting-direction-sided end region of the conical contour (38) of the conical sleeve (28).

4. An expansible anchor according to claim 1, characterised in that the stop projects into the clear width of the expansion sleeve (49).

5. An expansible anchor according to claim 4, characterised in that the radial dimension of the radial projection corresponds substantially to the diameter of the expansion sleeve (5, 29).

### Revendications

1. Cheville à expansion à introduire dans des trous récepteurs, avec une douille expansible, une douille conique que l'on peut introduire dans la précédente et un cône d'expansion disposé sur une tige de traction que l'on peut introduire dans la douille conique en sens opposé à la direction d'introduction, les contours coniques extérieurs de la douille conique et du cône d'expansion présentant des angles de cônes différents, caractérisée en ce qu'il est prévu une butée (14, 39, 55) réalisée sous forme de saillie radiale limitant le parcours d'introduction de la pièce présentant l'angle de cône ($\alpha$) le plus petit.

2. Cheville à expansion selon la revendication 1, caractérisée en ce que la butée (14) est disposée dans la zone terminale du cône d'expansion (3) du côté de la direction d'introduction.

3. Cheville à expansion selon la revendication 1, caractérisée en ce que la butée (39) est disposée dans la zone terminale du côté de la direction d'introduction du contour conique (38) de la douille conique (28).

4. Cheville à expansion selon la revendication 1, caractérisée en ce que la butée dépasse dans le diamètre libre de la douille conique (49).

5. Cheville à expansion selon la revendication 4, caractérisée en ce que la dimension radiale de la saillie radiale correspond sensiblement au diamètre de la douille expansible (5, 29).

**Fig. 1**

**Fig. 3**

**Fig.1a**      **Fig.1b**      **Fig.1c**

0 188 172

**Fig.2a**    **Fig.2b**    **Fig.2c**

0 188 172